# EUROPEAN PATENT APPLICATION

(11) **EP 1 325 819 A2**
(43) Date of publication of application: **09.07.2003**
(21) Application number: 02029097.9
(22) Date of filing: 30.12.2002
(51) Int. Cl.: B60B 21/02

(54) **Tread supporting ring for use with a rim for a tire having two beads**

(30) Priority: 07.01.2002 US 345508 P
(71) Applicant: THE GOODYEAR TIRE & RUBBER COMPANY, Akron, Ohio 44316-0001 (US)
(72) Inventor: Ajbani, Manoj, Copley, Ohio 44321 (US); Kiehl, Christopher, Akron, Ohio 44303 (US); Hahn, Bruce Raymond, Hudson, Ohio 44236 (US); Pyle, Kevin James, Coshocton, Ohio 43812-1079 (US)
(74) Representative: Leitz, Paul

(57) **Abstract**

There is disclosed a tread supporting ring (3) for use with a rim for a tire having two beads comprising a sulfur cured rubber composition composed of:
(A) 65 to 95 parts by weight per 100 parts by weight of rubber (phr) of a first rubber containing olefinic unsaturation; and
(B) 5 to 35 phr of a rubber having nylon side chains grafted thereto, and
(C) 1 to 40 phr of at least one nylon.

## Description

### Background of the Invention

US-A- 5,787,950 discloses a rim, supporting ring and assembly intended for mounting a tire having at least two beads. The rolling assembly is intended for use in the event of traveling when the tire inflation pressure drops abnormally with respect to the nominal pressure of use and when the inflation pressure may even be zero. Such assembly is known throughout the industry as the PAX design and which has been commercialized by Michelin. The supporting ring is made of vulcanized rubber that has been reinforced by wires or cables arranged circumferentially to within about 2°. In order to achieve the high degree of stiffness in the vulcanized rubber, large amounts of filler are used. Unfortunately, as the levels of filler is increased, the amount of heat build up is increased which is a disadvantage when operating in an under inflated condition.

Also, when using large levels of conventional fillers with high specific gravity such as carbon black and silica, the weight of the vulcanized tread supporting ring is increased leading to increased fuel consumption. Large levels of conventional fillers also increase the viscosity of the unvulcanized rubber leading to processing problems.

### Summary of the Invention

The present invention relates to a tread supporting ring for use with a rim for a pneumatic tire having two beads.

### Description of the Drawings

Figure 1 shows a diagram, viewed in meridian section, of a first rim variant, according to the invention and provided with a supporting ring for the tread.
Figures 2 through 4 show diagrams of a second, third and fourth variant respectively of a rim according to the invention.
Figure 5 shows a fifth variant of a rim, provided with supporting ring having an adapted shape.

### Detailed Description of the Invention

There is disclosed a tread supporting ring for use with a rim for a tire having two beads comprising a sulfur cured rubber composition composed of:
(A) 65 to 95 parts by weight per 100 parts by weight or rubber (phr) of a first rubber containing olefinic unsaturation; and
(B) 5 to 35 phr of a rubber having nylon side chains grafted thereto; and
(C) 1 to 40 phr of at least one nylon.

The design of the assembly comprising the rim and supporting ring are disclosed in US-A- 5,787,950.

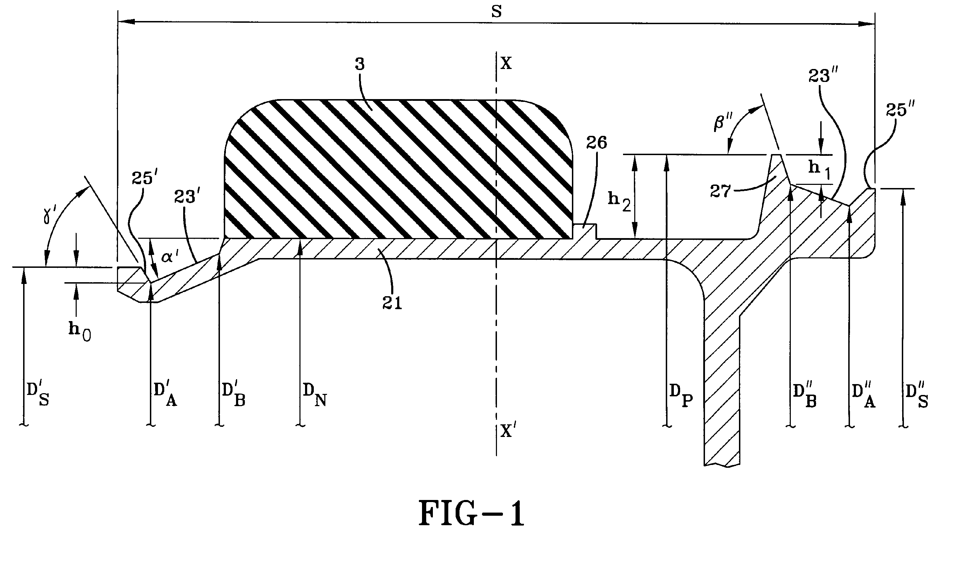

The rim shown in Figure 1, of axial width S, measured between its ends or edges furthest from the equatorial plane XX', is formed mainly by two rim seats 23' and 23" and a rim base 21, without a mounting groove. The two rim seats 23' and 23" have axially outer ends on circles, the diameters D'_{A} and D"_{A} of which are smaller than the diameters D'_{B} and D"_{B} of the circles on which the axially inner ends are located. These two seats have frustoconical generatrices which form with the axis of rotation of the rim an angle α', which is identical for the two generatrices, of 6°. The diameter D"_{B} of the axially inner end of the second rim seat 23" is greater than the diameter D'_{B} of the axially inner end of the first rim seat 23'. The two rim seats 23' and 23" are axially extended on the outside, respectively by two projections 25' and 25" of low height h₀, equal to 3.5 mm in the example described, and respectively of diameters D'_{S} and D"_{S}, which are smaller than the diameters D'_{B} and D"_{B} of the axially inner ends of the seats 23' and 23". The two projections 25' and 25" have internal frustoconical walls, said walls forming with the axis of rotation of the rim the same angle α', of 45°. Axially on the inside, the first rim seat 23' is joined to the rim base 21 by means of a frustoconical generatrix, the diameter D_{N} of the cylindrical rim base 21 being slightly greater than the diameter D'_{B} of the axially inner end of the first seat 23'. Said rim base 21 is provided with a positioning stop 26, acting, as its name indicates, to position axially a supporting ring 3 of the tread, of axial width smaller than the axial distance between the two axially inner ends of the rim seats 23' and 23" which can be slipped on directly over the first seat. Between the axially inner end of the second rim seat 23" and the end of the rim base 21 closest to said seat 23", there is located a protuberance 27. Said protuberance 27 has, firstly, an outer frustoconical generatrix forming with the axis of rotation an angle β", open axially towards the inside and radially towards the outside and equal to 45°, and, secondly, an inner generatrix substantially perpendicular to the axis of rotation of the rim. "Substantially perpendicular" is intended to mean a generatrix forming with the axis of rotation of the rim an angle open axially and radially towards the outside of between 75° and 90°. The protuberance 27 has its radially outer end on a circle of diameter D_{P}, which diameter is greater than the diameter of any part located between said end and the rim edge corresponding to the seat 23", and in particular greater than the diameters D"_{B}, D"_{A} and D"_{S}, which of the projection 25". The difference 2h₁ between the diameters D_{P} and D"_{B}, equal to 9 mm in the example described, is less than half the difference 2h₂ between the diameters D_{P} and D_{N}, h₂ being equal to 10 mm.

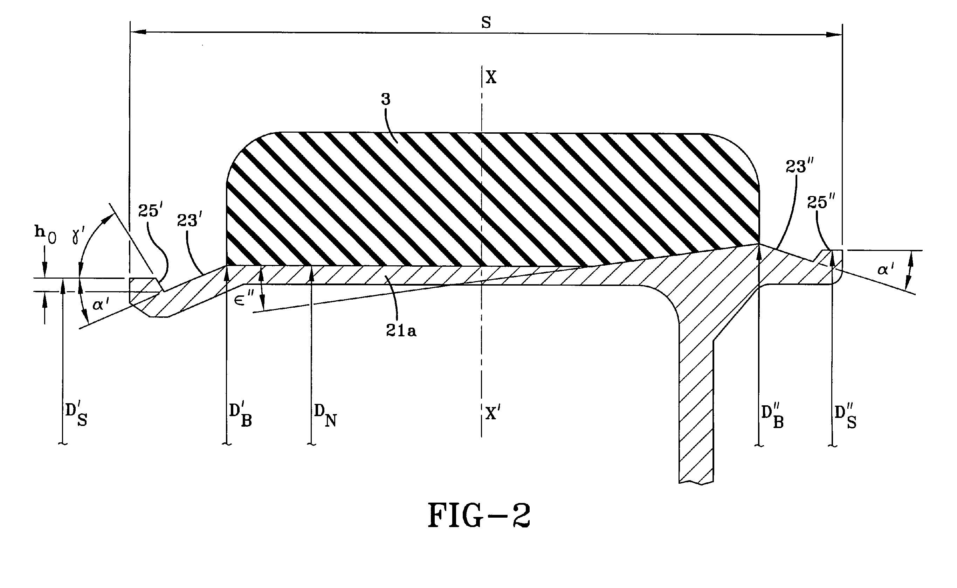

The rim shown in Figure 2 differs mainly from that shown in Figure 1 by the fact that the rim base 21a is in its entirety a supporting surface suitable for receiving a supporting ring 3 of a tread. The rim base 21a is not completely cylindrical, but comprises in part a frustoconical generatrix forming with the axis of rotation of the rim an angle e" which is open axially and radially towards the outside, of low value, equal to 10° in the example described. Said frustoconical generatrix of the rim base 21a is axially adjacent to the axially inner end of the second rim seat 23"', the diameter D"_{B} of said end always being greater than the diameter D'_{B} of the axially inner end of the first rim seat 23', which diameter itself is equal to the minimum diameter D_{N} of the rim base 21a.

The ring 3 then acts as an internal shoulder for holding each bead of the tire in a manner resistant to unwedging.

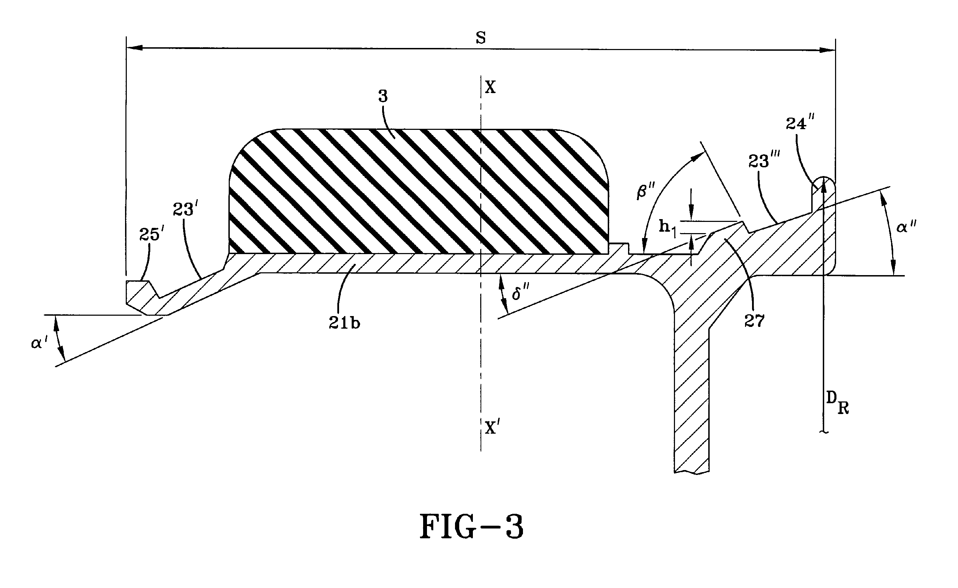

The rim shown in Figure 3 differs from that shown in Figure 1 by the presence of a second rim seat 23''' inclined towards the inside. In fact, the second seat 23"' has an axially inner end located on a circle of diameter smaller than the diameter of the circle on which the axially outer end is located. This second rim seat 23''' has a frustoconical generatrix forming with the axis of rotation of the rim an angle α", open axially and radially towards the outside, of less than the angle α' which the generatrix of the first rim seat 23' forms with said axis of rotation, this solution making it possible to modify the clamping on the rim of the corresponding bead of the tire. The seat 23''' is extended axially on the outside by a rim flange 24" having an inner wall perpendicular to the axis of rotation and having a radially outer end, the diameter D_{R} of which is the maximum diameter of the rim. Axially on the inside, the second rim seat 23''' is extended by a protuberance 27, the height h₁ of which is similar to the height of the projections or humps normally used on current standardized rims, referred to as "with unwedging-resistant profile" and bearing names such as "Hump", "Double Hump", "Flat Hump", "Double Flat Hump", "Asymmetric Hump" etc. The outer generatrix of said projection forms with the axis of rotation of the rim an angle β" of 45°, while the inner generatrix of said projection 27 forms with said axis of rotation an angle δ" open axially and radially towards the outside of 30°.

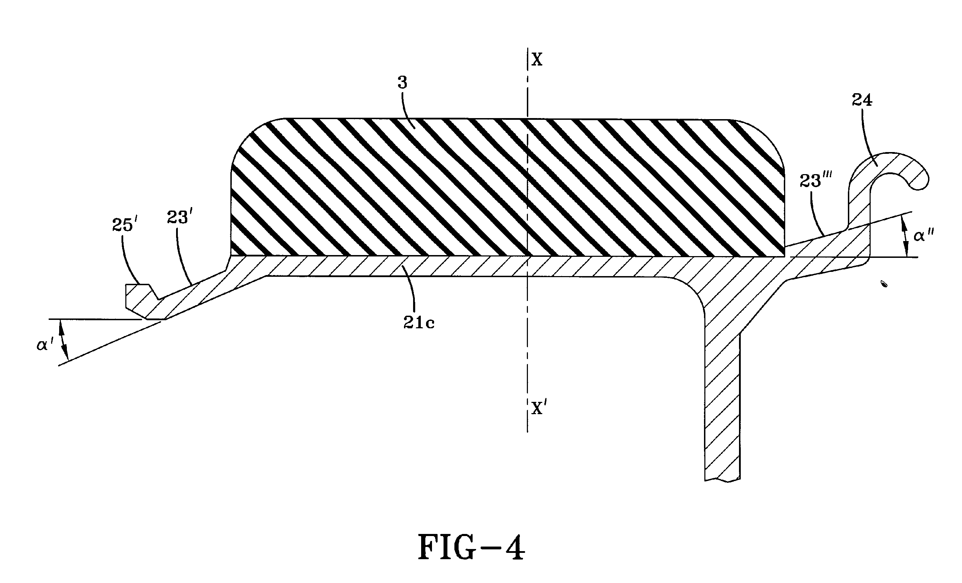

The rim shown in Figure 4 is very simple. The configuration of the first rim seat 23' is unchanged with respect to the first rim seats described; the rim base 21c is cylindrical and occupies the entire axial distance between the axially inner ends of the two rim seats 23' and 23"'; the second rim seat 23''' is a seat inclined towards the inside and its generatrix forms, with the axis of rotation of the rim and as in the example illustrated in Figure 3, an angle α" which is smaller than the angle α' which the generatrix of the first rim seat 23' forms with said axis. The second rim seat 23''' is extended axially on the outside by a rim flange 24 provided with a hook, the configuration of which is similar in all points to that of a known, standardized rim flange. On the inside, the second rim seat 23''' has its axially inner end in the plane parallel to the equatorial plane which also contains the end of the rim base 21c, and the supporting ring 3 rests on the entire axial width of the rim base 21c.

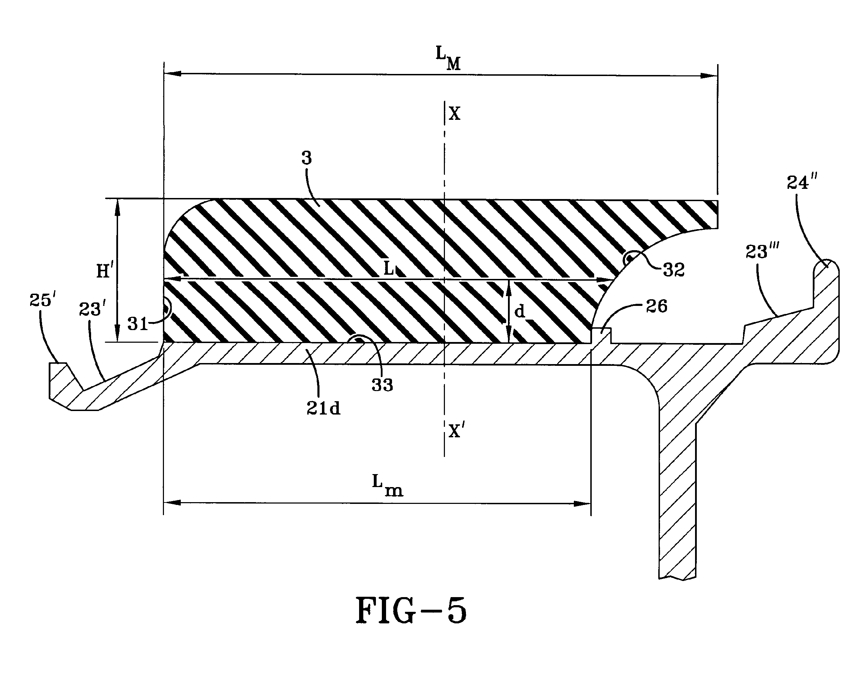

Figure 5 shows an assembly formed of a rim according to the invention and a supporting ring 3 of the tread, having a special shape, when viewed in meridian section. The rim is substantially identical to the rim shown in Figure 3, in which the protuberance 27 has been omitted, the axially inner end of the second rim (seat) 23''' being adjacent to the end of the rim base 21d closest to said seat 23"'. As for the supporting ring 3, having a base 33 of axial width Lₘ which is less than the axial distance between the two ends of the rim base 21d, the latter having a positioning stop 26, it has, firstly, a lateral wall 31, closest to the first rim seat 23', substantially perpendicular to the axis of rotation of the rim, and, secondly, a lateral wall 32, closest to the second rim seat 23''', such that the axial width L of the ring, measured on a straight line parallel to the axis of rotation, increases regularly from the minimum value Lₘ to a maximum value L_{M}, as a function of the radial distance d measured from the rim base 21d, said maximum width L_{M} being attained for a ring height substantially equal to 90 percent of the total height H' of the ring 3. This latter solution makes it possible, as described above, to dispense with the protuberance 27, while avoiding the unwedging of the bead intended to be mounted on the second rim seat, the sidewall corresponding to said bead being able to rest on the lateral wall of the supporting ring.

An assembly, formed by a rim and a supporting ring 3 of the tread, is in accordance with the invention when the rim of the assembly is a rim such as described above and the supporting ring is ovalisable, preferably circumferentially inextensible and able to be slipped on to the rim base.

The maximum effectiveness of the assembly is obtained for great heights of supporting ring, preferably greater than 40 percent of the height of the carcass reinforcement of the tire intended to be mounted with said ring. This particular feature offers the advantage of prolonging travelling with a flat tire, that is to say, at zero inflation pressure, without causing, in the case of a conventional structure of the sidewalls of the tire, degeneration at the level thereof, of the carcass reinforcement and even of the crown reinforcement.

The supporting ring 3 can be slipped on easily owing to the special characteristics of the mounting rim, and if its minimum internal diameter is selected to be at least equal to the minimum diameter of the rim base, and at most greater than said diameter by 2 mm, its internal generatrix being parallel to the generatrix of said rim base. In order to avoid possible disadvantages due to the effect of centrifugal forces at high speed, the internal generatrix of the ring is distant from the generatrix of the rim base by at most 2 mm.

The supporting ring 3, which is ovalisable and inextensible circumferentially, is preferably reinforced with wires or cables arranged circumferentially, to within about 2°. Such a construction permits easy manipulation, while ensuring inextensibility under all travelling conditions and in particular under the action of centrifugal forces due to high speed.

Generally, the supporting ring 3, when viewed in meridian section, has a quasi-rectangular shape with two lateral walls substantially perpendicular to the axis of rotation of the assembly. It may be advantageous for the supporting ring to have a different shape, when viewed in meridian section, and in the event that said supporting ring has a base of axial width less than the axial distance between the two beads. Said shape may be characterized in that the lateral wall closest to the second rim seat is such that the axial distance between said wall and the plane parallel to the equatorial plane passing through the axially inner end of the second rim seat increases as a function of the height of the supporting ring, to reach its maximum and become very close to said parallel plane at a radial distance from the rim base substantially equal to the height of the ring. Variation in the design of the ring insert may be possible without significantly deviating from the function of the ring insert.

The rubber composition for use in the tread supporting ring of the present invention may be prepared in accordance with the teachings of US-A-4,996,263 and 5,268,134.

The rubber composition alloy contains a rubber having nylon side chains grafted thereto. The rubber to which the nylon side chains are grafted typically contains repeat units which are derived from diene monomers, such as conjugated diene monomers and/or non-conjugated diene monomers. Such conjugated and non-conjugated diene monomers typically contain from 4 to 12 carbon atoms and preferably contain from 4 to 8 carbon atoms. Some representative examples of suitable diene monomers include 1,3-butadiene, isoprene, 2,3-dimethyl-1,3-butadiene, 2-methyl-1,3-pentadiene, 3,4-dimethyl-1,3-hexadiene, 4,5-diethyl-1,3-octadiene, phenyl-1,3-butadiene and the like. The polydiene rubber can also contain various vinyl aromatic monomers, such as styrene, 1-vinylnaphthalene, 2-vinylnaphthalene, α-methylstyrene, 4-phenylstyrene, 3-methylstyrene, and the like. Some representative examples of polydiene rubbers that can be modified to have nylon side chains include polybutadiene, styrene-butadiene rubber (SBR), synthetic polyisoprene, natural rubber, isoprene-butadiene rubber, isoprene-butadiene-styrene rubber, nitrile rubber, carboxylated nitrile rubber, EPDM rubber and mixtures thereof. The preferred rubbers with nylon side chains are EPDM, natural rubber and synthetic polyisoprene.

The rubber having nylon side chains may contain no olefinic unsaturation or are olefinic saturated. One such example is the terpolymer of ethylene-ethylacrylate-maleic anhydride. The reaction functionality of these saturated rubbers may be a carboxylic acid moiety.

As will be discussed later, using a "functionalized" rubber is one method to produce the rubber having nylon side chains. The amount of reactive functionality present on the rubber may range from 0.25 percent by weight to 10 percent by weight of the rubber. Preferably, the range will be from 0.5 percent to 8 percent by weight of the rubber, with a range of from 0.6 percent to 3 percent by weight being the most preferred range.

Virtually any type of nylon can be utilized in preparing the rubber composition including the nylon which are side chains to the above rubbers. These nylons are polyamides which can be prepared by reacting diamines with dicarboxylic acids. The diamines and dicarboxylic acids which are utilized in preparing such nylons will generally contain from 2 to 12 carbon atoms. Nylons can also be prepared by addition polymerization. Nylon which is prepared by reacting hexamethylene diamine with adipic acid (hexanedioic acid) can be utilized in the process of this invention. It is generally referred to as nylon-6,6 because it is derived from a diamine which contains 6 carbon atoms and a dicarboxylic acid which contains 6 carbon atoms. Nylon-6,6 typically has a number average molecular weight of 12,000 to 20,000, is exceptionally strong, abrasion resistant, and available from a wide variety of sources.

The nylons which are preferred for use in the alloy have melting points which are within the range of 150°C to 255°C. Some representative examples of such preferred nylons include nylon-6,6, nylon-6, nylon-7, nylon-8, nylon-9, nylon-10, nylon-11, nylon-12 and nylon-6,12. The most preferred nylons have melting points which are within the range of 175°C to 230°C. Some representative examples of such highly preferred nylons include nylon-6, nylon-8, nylon-9, nylon-10, nylon-11 and nylon-12.

Polycapryllactam, which is generally referred to as nylon-8, is generally prepared by polymerizing capryllactam. This polymerization takes place readily in the melt with a small amount of amino acid initiator. Capryllactam is prepared by dimerization of butadiene to cyclooctadiene, which is hydrogenated to cycloctane, oxidized to cycloctanone, converted to the oxime with hydroxylamine, and subjected to the Beckmann rearrangement. Nylon-8 has a melting point of 200°C.

Copolyamides that contain repeating polymeric units of nylon-6 and nylon-6,6 may be used. One example of such copolyamide is Ultramid™ C commercially available from BASF and having a melt point of about 196°C.

Poly(ω-aminoundecanoic acid), known as nylon-11, can be prepared by the melt polymerization of ω-aminoundecanoic acid under an inert gas atmosphere at a temperature of about 215°C. Nylon-11 has a melting point of 190°C.

Nylon-12 or poly(ω-dodecanolactam) is normally prepared by the polymerization of ω-dodecanolactam at a high temperature of at least 300°C utilizing an acid catalyst ω-dodecanolactam is prepared by trimerization of butadiene to cyclododecatriene, the subsequent hydrogenation to cyclododecane, followed by oxidation to cyclododecanone, which is converted to the oxime with hydroxylamine, with the oxime being rearranged by Beckmann rearrangement to yield the ω-dodecanolactam. Nylon-12 has a melting point of 179°C° and is very highly preferred for use as the nylon in the process of this invention.

The nylons used in the rubber composition will typically have number average molecular weight which is within the range of 8,000 to 40,000. Such nylons will more typically have number average molecular weights which are within the range of 10,000 to 25,000. The nylon utilized can be capped or can have free primary amine end groups. However, nylons having free amine end groups are believed to react more quickly with maleic anhydride and are accordingly preferred.

Nylons having acid capped end groups may also be used. When using such nylons, they may be reacted with a rubber containing an epoxide, glycidyl methacrylate or hydroxyl functionality. Examples of such rubbers include epoxidized polybutadiene and the terpolymer of ethylene-ethylacrylate-glycidylmethacrylate that is available from Atofina under the designation Lotader™ AX8900.

The rubber having nylon side chains may be prepared by simply reacting the maleic anhydride with the polydiene rubber and the nylon. This can be accomplished by simply mixing the maleic anhydride homogeneously throughout a blend of the polydiene rubber and the nylon and heating the maleic anhydride/nylon/polydiene rubber blend. The double bond in the maleic anhydride will react with the double bonds present in the polydiene rubber and the anhydride groups in the maleic anhydride will react with amine groups present in the nylon. This reaction causes nylon chains to be grafted onto the backbone of the polydiene rubber.

The reaction between the maleic anhydride, nylon and polydiene rubber can be carried out utilizing several satisfactory techniques. For instance, the maleic anhydride, nylon, and polydiene rubber can be simultaneously mixed together and heated to graft the nylon onto the rubber. In another scenario, the maleic anhydride can be reacted with the rubber to produce a rubber/maleic anhydride adduct and the rubber/maleic anhydride adduct can then be subsequently reacted with the nylon to produce the modified rubber of this invention. In still another technique of this invention, the maleic anhydride is first reacted with the nylon to produce a nylon/maleic anhydride adduct and the nylon/maleic anhydride adduct is subsequently reacted with the rubber. It is desirable to pre-react the maleic anhydride with the nylon in a first reaction step and to subsequently react the reaction product with the rubber because the rubber is subjected to elevated temperatures for a shorter duration of time and accordingly less degradation occurs.

The reaction between the reacting groups such as maleic anhydride and the nylon will typically be carried out at a temperature which is within the range of 150°C to 300°C. It will preferably be carried out at a temperature which is within the range of 165°C to 250°C and will more preferably be conducted at a temperature which is within the range of 180°C to 200°C. However, such reactions between the reacting groups, such as maleic anhydride and the nylon, will be carried out at a temperature which is at least as high as the melting point of the nylon. Reactions between rubber/maleic anhydride adducts and nylon will also be conducted within these temperature ranges.

The reactions between rubber and maleic anhydride and the reactions between rubber and nylon/maleic anhydride adducts will typically be carried out at a temperature which is within the range of 150°C to 300°C. Such reactions will more typically be conducted at temperatures which are within the range of 165°C to 250°C. The preferred temperature for such reactions depends upon the rubber being utilized and the reaction mechanism. For instance, most polydiene rubbers, such as high cis-1,4-polybutadiene, medium vinyl polybutadiene, SBR, synthetic polyisoprene, natural rubber, isoprene-butadiene rubber, nitrile rubber and isoprene-butadiene-styrene rubber, will react with maleic anhydride or nylon/maleic anhydride adducts at temperatures of greater than 180°C by an electrocyclic reaction without the need to utilize a catalyst. The most preferred temperature for conducting such reactions is accordingly from 180°C to 200°C. In cases where the nylon has a melting point of above 200°C then the preferred reaction temperature is slightly above the melting point of the nylon. Such reactions can be carried out at lower temperatures by a free radical mechanism. However, free radicals lead to gel formation and such procedures are generally not desirable. In fact, it is beneficial to conduct such reactions which are carried out utilizing electrocyclic reaction mechanisms in the presence of free radical trapping antioxidants to inhibit gel formation. Some representative examples of free radical trapping antioxidants which can be used include
(A) the reaction product of p-nonyl phenol, formaldehyde, and dodecane thiol-1 (Wingstay® K), and
(B) 2-(2-hydroxy-3-t-butyl-5-methylbenzyl)4-methyl-6-t-butyl phenyl methacrylate.

EPDM rubber will generally not react with maleic anhydride or nylon/maleic anhydride adducts at commercially acceptable reaction rates by electrocyclic reaction mechanisms. For this reason, it is desirable to utilize a free radical reaction in reacting EPDM with maleic anhydride or nylon/maleic anhydride adducts. Such reactions are generally conducted at a temperature which is within the range of 180°C to 210°C. Such reactions are conducted in the presence of one or more free radical catalysts. Some representative examples of free radical initiators which can be used include various peroxygen compounds such as potassium persulfate, ammonium persulfate, benzoyl peroxide, hydrogen peroxide, di-t-butyl peroxide, dicumyl peroxide, 2,4-dichlorobenzoyl peroxide, decanoyl peroxide, lauroyl peroxide, cumene hydroperoxide, p-menthane hydroperoxide, t-butyl hydroperoxide, acetyl acetone peroxide, methyl ethyl ketone peroxide, succinic acid peroxide, dicetyl peroxydicarbonate, t-butyl peroxyacetate, t-butyl peroxymaleic acid, t-butyl peroxybenzoate, acetyl cyclohexyl sulfonyl peroxide and the like; the various azo compounds such as 2-t-butylazo-2-cyanopropane, dimethyl azodiisobutyrate, azodiisobutyronitrile, 2-t-butylazo-1-cyanocyclohexane, 1-t-amylazo-1-cyanocyclohexane, and the like; the various alkyl perketals, such as 2,2-bis-(t-butylperoxy)butane, ethyl 3,3-bis(1-butylperoxy)butyrate, 1,1-di-(t-butylperoxy) cyclohexane, and the like. Mercapto benzothiazyl disulfide is a preferred free radical catalyst.

The maleic anhydride is mixed throughout the rubber and/or the nylon utilizing conventional mixing procedures. For example, the mixing can be carried out in a Banbury® mixer or a mill mixer or continuous mixer such as a twin-screw extruder. The amount of maleic anhydride utilized will typically be within the range of 0.1 phr to 20 phr. In most cases, it will be preferred to utilize from 0.5 phr to 3 phr. It is generally most preferred to utilize from 0.8 phr to 2 phr of the maleic anhydride.

An alternative to using free maleic anhydride as discussed above is using a maleated or maleanized rubber. For example, maleated EPDM is commercially available from Uniroyal under the designation Royaltuff™ 490 or 498.

In the instance when one uses a maleated rubber, one can avoid handling free maleic anhydride. One can simply mix the maleated rubber, nylon and first rubber, in a conventional extruder to form the rubber composition.

The rubber composition is comprised of from 5 to 35 phr of the rubber having nylon side chains grafted thereto. Preferably, the rubber having nylon side chains grafted thereto comprises of from 14 to 25 phr of the rubber composition.

The other critical component in the composition is the nylon. The nylon may comprise of from 1 to 40 phr of the composition. Preferably, from 8 to 25 phr of the composition. This component refers to the unreacted nylon or non-grafted nylon in the composition.

The amount of nylon in the rubber composition may vary depending on the viscosities of the nylon and rubbers used. Preferably, the rubber composition will have a Mooney viscosity (ML 1+4 at 100°C) in the range of from 25 to 110 in order to mix in conventional rubber processing equipment below the melting point of the nylon.

As indicated above, from 65 to 95 phr is the first rubber. Preferably, from 75 to 86 phr of the rubber composition is the first rubber. The first rubber may be the same or different from that used to form the rubber having nylon side chains grafted thereto.

The phrase "rubber or elastomer containing olefinic unsaturation" is intended to include both natural rubber and its various raw and reclaim forms as well as various synthetic rubbers. In the description of this invention, the terms "rubber" and "elastomer" may be used interchangeably, unless otherwise prescribed. The terms "rubber composition", "compounded rubber" and "rubber compound" are used interchangeably to refer to rubber which has been blended or mixed with various ingredients and materials and such terms are well known to those having skill in the rubber mixing or rubber compounding art. Representative synthetic polymers are the same as listed above for use as the rubber having nylon side chains, as well as tin-coupled rubbers. Preferably, the first rubber is different from the rubber used as the rubber having nylon side chains. In this embodiment, it may be preferred to use a rubber having a lower degree of unsaturation as the rubber having nylon side chains than used in the first rubber.

In one aspect the first rubber to be combined with the rubber having nylon side chains and nylon is preferably of at least two of diene based rubbers. For example, a combination of two or more rubbers is preferred such as cis 1,4-polyisoprene rubber (natural or synthetic, although natural is preferred), 3,4-polyisoprene rubber, styrene/isoprene/butadiene rubber, emulsion and solution polymerization derived styrene/butadiene rubbers, cis 1,4-polybutadiene rubbers and emulsion polymerization prepared butadiene/acrylonitrile copolymers.

In one aspect of this invention, an emulsion polymerization derived styrene/butadiene (E-SBR) might be used having a relatively conventional styrene content of 20 to 28 percent bound styrene or, for some applications, an E-SBR having a medium to relatively high bound styrene content, namely, a bound styrene content of 30 to 45 percent.

The presence of the E-SBR itself is considered beneficial for a purpose of enhancing processability of the uncured elastomer composition mixture, especially in comparison to a utilization of a solution polymerization prepared SBR (S-SBR).

By emulsion polymerization prepared E-SBR, it is meant that styrene and 1,3-butadiene are copolymerized as an aqueous emulsion. Such are well known to those skilled in such art. The bound styrene content can vary, for example, from 5 to 50 percent. In one aspect, the E-SBR may also contain acrylonitrile to form a terpolymer rubber, as E-SBAR, in amounts, for example, of 2 to 30 weight percent bound acrylonitrile in the terpolymer.

Emulsion polymerization prepared styrene/butadiene/acrylonitrile copolymer rubbers containing 2 to 40 weight percent bound acrylonitrile in the copolymer are also contemplated as diene based rubbers for use in this invention.

The solution polymerization prepared SBR (S-SBR) typically has a bound styrene content in a range of 5 to 50, preferably 9 to 36, percent. The S-SBR can be conveniently prepared, for example, by organo lithium catalyzation in the presence of an organic hydrocarbon solvent.

The 3,4-polyisoprene rubber (3,4-PI) is considered beneficial for a purpose of enhancing the tire's traction when it is used in a tire tread composition. The 3,4-PI and use thereof is more fully described in US-A-5,087,668. The Tg refers to the glass transition temperature which can conveniently be determined by a differential scanning calorimeter at a heating rate of 10°C per minute.

The cis 1,4-polybutadiene rubber (BR) can be prepared, for example, by organic solution polymerization of 1,3-butadiene. The BR may be conveniently characterized, for example, by having at least a 90 percent cis 1,4-content.

When mixing the first rubber, rubber having nylon side chains and nylon, it is preferred to use a twin-screw extruder. It is also preferred that the rubbers are in a powder, crumb rubber or pellet form for ease in feeding the extruder. When the rubbers are in bale form, it is preferred that the bale rubber be converted to a crumb or ground form of rubber that is partitioned with a partitioning agent such as silica, talc, CaCO₃ or clay to keep the rubber free flowing without massing back together. The nylon is generally fed in the main hopper for melting along the length of the extruder. The rubber containing the reactive functionality, such as maleic anhydride, and the first rubber may be fed in the main hopper or in a side feeder which is located downstream in an extruder. Such compounding methods are known to the skilled in the art.

The term "phr" as used herein, and according to conventional practice, refers to "parts by weight of a respective material per 100 parts by weight of rubber, or elastomer."

In addition to the first rubber, rubber having nylon side chains and nylon, conventional fillers may be also present. The amount of such conventional fillers may range from 10 to 90 phr. Preferably, the filler is present in an amount ranging from 20 to 50 phr.

When using large levels of conventional fillers with a high specific gravity such as carbon black and silica, the weight of the vulcanized rubber ring is increased leading to increased fuel consumption. Therefore, it is necessary that a substantial portion of conventional fillers is substituted with a low specific gravity and high melting point thermoplastic, most preferably nylon, to provide a lighter weight ring and with a lower heat build-up, when compared with the conventional fillers used in reinforced vulcanized rubber ring.

The commonly employed siliceous pigments which may be used in the rubber compound include conventional pyrogenic and precipitated siliceous pigments (silica), although precipitated silicas are preferred. The conventional siliceous pigments preferably employed in this invention are precipitated silicas such as, for example, those obtained by the acidification of a soluble silicate, e.g., sodium silicate.

Such conventional silicas might be characterized, for example, by having a BET surface area, as measured using nitrogen gas, preferably in the range of 40 to 600, and more usually in a range of 50 to 300 square meters per gram. The BET method of measuring surface area is described in The Journal of the American Chemical Society, Volume 60, Page 304 (1930).

The conventional silica may also be typically characterized by having a dibutylphthalate (DBP) absorption value in a range of 100 to 400, and more usually 150 to 300 cm³/100g.

The conventional silica might be expected to have an average ultimate particle size, for example, in the range of 0.01 to 0.05 micron as determined by the electron microscope, although the silica particles may be even smaller, or possibly larger, in size.

Various commercially available silicas may be used, such as, only for example herein, and without limitation, silicas commercially available from PPG Industries under the Hi-Sil trademark with designations 210, 243, etc; silicas available from Rhone-Poulenc, with, for example, designations of Z1165MP and Z165GR and silicas available from Degussa AG with, for example, designations VN2 and VN3, etc.

Commonly employed carbon blacks can be used as a conventional filler. Representative examples of such carbon blacks include N110, N121, N220, N231, N234, N242, N293, N299, S315, N326, N330, M332, N339, N343, N347, N351, N358, N375, N539, N550, N582, N630, N642, N650, N683, N754, N762, N765, N774, N787, N907, N908, N990 and N991. These carbon blacks have iodine absorptions ranging from 9 to 145 g/kg and DBP No. ranging from 34 to 150 cm³/100 g.

It may be preferred to have the rubber composition for use in the tire component to additionally contain a conventional sulfur containing organosilicon compound. Examples of suitable sulfur containing organosilicon compounds are of the formula:

Z-Alk-Sₙ-Alk-Z I

in which Z is selected from the group consisting of 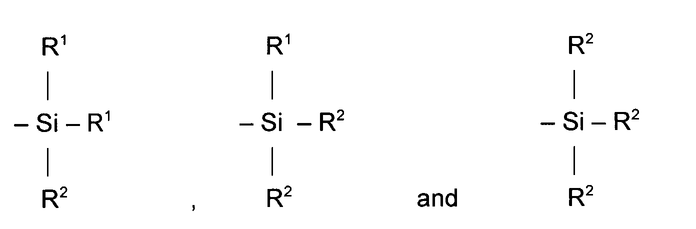 where R¹ is an alkyl group of 1 to 4 carbon atoms, cyclohexyl or phenyl; R² is alkoxy of 1 to 8 carbon atoms, or cycloalkoxy of 5 to 8 carbon atoms; Alk is a divalent hydrocarbon of 1 to 18 carbon atoms and n is an integer of 2 to 8.

Specific examples of sulfur containing organosilicon compounds which may be used in accordance with the present invention include:
3,3'-bis(trimethoxysilylpropyl) disulfide, 3,3'-bis (triethoxysilylpropyl) disulfide,
3,3'-bis(triethoxysilylpropyl) tetrasulfide, 3,3'-bis(triethoxysilylpropyl) octasulfide,
3,3'-bis(trimethoxysilylpropyl) tetrasulfide, 2,2'-bis(triethoxysilylethyl) tetrasulfide,
3,3'-bis(trimethoxysilylpropyl) trisulfide, 3,3'-bis(triethoxysilylpropyl) trisulfide,
3,3'-bis(tributoxysilylpropyl) disulfide, 3,3'-bis(trimethoxysilylpropyl) hexasulfide,
3,3'-bis(trimethoxysilylpropyl) octasulfide,
3,3'-bis(trioctoxysilylpropyl) tetrasulfide, 3,3'-bis(trihexoxysilylpropyl) disulfide,
3,3-bis(tri-2"-ethylhexoxysilylpropyl) trisulfide,
3,3'-bis(triisooctoxysilylpropyl) tetrasulfide,
3,3'-bis(tri-t-butoxysilylpropyl) disulfide,
2,2'-bis(methoxy diethoxy silyl ethyl) tetrasulfide,
2,2'-bis(tripropoxysilylethyl) pentasulfide,
3,3'-bis(tricyclonexoxysilylpropyl) tetrasulfide,
3,3'-bis(tricyclopentoxysilylpropyl) trisulfide,
2,2'-bis(tri-2"-methylcyclohexoxysilylethyl) tetrasulfide,
bis(trimethoxysilylmethyl) tetrasulfide,
3-methoxy ethoxy propoxysilyl 3'-diethoxybutoxy-silylpropyltetrasulfide,
2,2'-bis(dimethyl methoxysilylethyl) disulfide,
2,2'-bis(dimethyl sec.butoxysilylethyl) trisulfide,
3,3'-bis(methyl butylethoxysilylpropyl) tetrasulfide,
3,3'-bis(di t-butylmethoxysilylpropyl) tetrasulfide,
2,2'-bis(phenyl methyl methoxysilylethyl) trisulfide,
3,3'-bis(diphenyl isopropoxysilylpropyl) tetrasulfide,
3,3'-bis(diphenyl cyclohexoxysilylpropyl) disulfide,
3,3'-bis(dimethyl ethylmercaptosilylpropyl) tetrasulfide,
2,2'-bis(methyl dimethoxysilylethyl) trisulfide,
2,2'-bis(methyl ethoxypropoxysilylethyl) tetrasulfide,
3,3'-bis(diethyl methoxysilylpropyl) tetrasulfide,
3,3'-bis(ethyl di-sec. butoxysilylpropyl) disulfide,
3,3'-bis(propyl diethoxysilylpropyl) disulfide,
3,3'-bis(butyl dimethoxysilylpropyl) trisulfide,
3,3'-bis(phenyl dimethoxysilylpropyl) tetrasulfide,
3-phenyl ethoxybutoxysilyl 3'-trimethoxysilylpropyl tetrasulfide,
4,4'-bis(trimethoxysilylbutyl) tetrasulfide, 6,6'-bis(triethoxysilylhexyl) tetrasulfide,
12,12'-bis(triisopropoxysilyl dodecyl) disulfide,
18,18'-bis(trimethoxysilyloctadecyl) tetrasulfide,
18,18'-bis(tripropoxysilyloctadecenyl) tetrasulfide,
4,4'-bis(trimethoxysilyl-buten-2-yl) tetrasulfide,
4,4'-bis(trimethoxysilylcyclohexylene) tetrasulfide,
5,5'-bis(dimethoxymethylsilylpentyl) trisulfide,
3,3'-bis(trimethoxysilyl-2-methylpropyl) tetrasulfide,
3,3'-bis(dimethoxyphenylsilyl-2-methylpropyl) disulfide.

The preferred sulfur containing organosilicon compounds are the 3,3'-bis(trimethoxy or triethoxy silylpropyl) sulfides. The most preferred compounds are 3,3'-bis(triethoxysilylpropyl) disulfide and 3,3'-bis(triethoxysilylpropyl) tetrasulfide. Therefore as to formula I, preferably Z is 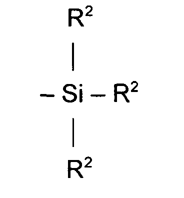 where R² is an alkoxy of 2 to 4 carbon atoms, with 2 carbon atoms being particularly preferred; alk is a divalent hydrocarbon of 2 to 4 carbon atoms with 3 carbon atoms being particularly preferred; and n is an integer of from 2 to 5 with 2 and 4 being particularly preferred.

The amount of the sulfur containing organosilicon compound of formula I in a rubber composition will vary depending on the level of other additives that are used. Generally speaking, the amount of the compound of formula I will range from 0.5 to 20 phr. Preferably, the amount will range from 1 to 10 phr.

It is readily understood by those having skill in the art that the rubber composition would be compounded by methods generally known in the rubber compounding art, such as mixing the various sulfur-vulcanizable constituent rubbers with various commonly used additive materials such as, for example, sulfur donors, curing aids, such as activators and retarders and processing additives, such as oils, resins including tackifying resins and plasticizers, fillers, pigments, fatty acid, zinc oxide, waxes, antioxidants and antiozonants and peptizing agents. As known to those skilled in the art, depending on the intended use of the sulfur vulcanizable and sulfur vulcanized material (rubbers), the additives mentioned above are selected and commonly used in conventional amounts. Representative examples of sulfur donors include elemental sulfur (free sulfur), an amine disulfide, polymeric polysulfide, morpholine disulfide and sulfur olefin adducts. Preferably, the sulfur donor is morpholine disulfide and/or elemental sulfur. The sulfur vulcanizing agent may be used in an amount ranging from 0.5 to 8 phr, with a range of from 1.5 to 6 phr being preferred. Typical amounts of tackifier resins, if used, comprise 0.5 to 10 phr, usually 1 to 5 phr. Typical amounts of processing aids comprise 1 to 50 phr. Such processing aids can include, for example, aromatic, naphthenic, and/or paraffinic processing oils. Typical amounts of antioxidants comprise 1 to 5 phr. Representative antioxidants may be, for example, styrenated phenols, butylated octylated phenol, butylated di(dimethylbenzyl) phenol, p-phenylenediamines, butylated reaction products of p-cresol and dicyclopentadiene (DCPD), polyphenolic antioxidants, hydroquinone derivatives, quinoline, diphenylene antioxidants and thioester antioxidants and the like and their blends. Some representative trade names of such products are Wingstay® S, Wingstay® T, Wingstay® C, Wingstay® 100, Wingstay® 100 AZ, Wingstay® 200, Wingstay® L or LHLS, Wingstay® K, Wingstay® 29 and Wingstay® SN-1 of The Goodyear Tire & Rubber Company and the like from Ciba Geigy or Great Lakes Chemical Company or Flexsys. Additional examples are disclosed in The Vanderbilt Rubber Handbook (1978), Pages 344 through 346. Typical amounts of antiozonants comprise 1 to 5 phr. Typical amounts of fatty acids, if used, which can include stearic acid comprise 0.5 to 3 phr. Typical amounts of zinc oxide comprise 2 to 5 phr. Typical amounts of waxes comprise 1 to 5 phr. Often microcrystalline waxes are used. Typical amounts of peptizers comprise 0.1 to 1 phr. Typical peptizers may be, for example, pentachlorothiophenol and dibenzamidodiphenyl disulfide.

Accelerators are used to control the time and/or temperature required for vulcanization and to improve the properties of the vulcanizate. In one embodiment, a single accelerator system may be used, i.e., primary accelerator. The primary accelerator(s) may be used in total amounts ranging from 0.5 to 4, preferably 0.8 to 1.5, phr. In another embodiment, combinations of a primary and a secondary accelerator might be used with the secondary accelerator being used in smaller amounts, such as from 0.05 to 3 phr, in order to activate and to improve the properties of the vulcanizate. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. Preferably, the primary accelerator is a sulfenamide. If a second accelerator is used, the secondary accelerator is preferably a guanidine, dithiocarbamate or thiuram compound.

The mixing of the rubber composition with any of the above conventional additives can be accomplished by methods known to those having skill in the rubber mixing art. The mixing may be accomplished in a conventional extruder or Banbury™ depending on the ratios of the ingredients. In a Banbury™, the ingredients are typically mixed in at least two stages, namely at least one non-productive stage followed by a productive mix stage. The final curatives including sulfur vulcanizing agents are typically mixed in the final stage which is conventionally called the "productive" mix stage in which the mixing typically occurs at a temperature, or ultimate temperature, lower than the mix temperature(s) than the preceding non-productive mix stage(s). The rubber composition with the conventional additives are mixed in one or more non-productive mix stages. The terms "non-productive" and "productive" mix stages are well known to those having skill in the rubber mixing art. The rubber/nylon alloy may be added as a separate ingredient or in the form of a masterbatch. The rubber composition containing the rubber/nylon alloy, as well as the sulfur-containing organosilicon compound, if used, may be subjected to a thermomechanical mixing step. The thermomechanical mixing step generally comprises a mechanical working in a mixer or extruder for a period of time suitable in order to produce a rubber temperature between 140°C and 190°C. The appropriate duration of the thermomechanical working varies as a function of the operating conditions and the volume and nature of the components. For example, the thermomechanical working may be from 1 to 20 minutes.

The rubber composition containing the rubber and rubber/nylon alloy may be formed in the shape of the tread supporting ring by injection molding, extrusion or calendering.

The pneumatic tire of the present invention may be a passenger tire, aircraft tire, agricultural, earthmover, motorcycle, off-the-road, truck tire and the like. Preferably, the tire is passenger or truck tire. The tire may also be a radial or bias, with a radial being preferred.

Vulcanization of the tread supporting ring of the present invention is generally carried out at conventional temperatures ranging from 100°C to 200°C. Preferably, the vulcanization is conducted at temperatures ranging from 110°C to 180°C. Any of the usual vulcanization processes may be used such as heating in a press or mold, heating with superheated steam or hot air.

### EXAMPLE I

### Preparation of First Rubber/Rubber Having

### Nylon Side Chains/Nylon Composition

The compounds were prepared in continuous twin-screw extruders wherein the nylon was heated and sheared at temperatures at or above their respective melt transition and glass transition temperatures. A 43 mm Berstroff twin-screw extruder was used. Nylon was fed in the main hopper. The rubber with a reactive functionality and the first rubber were introduced in the side feeder approximately halfway down the extruder length. The temperatures of the barrels 1 through 6 of the extruder and the die were set at about 237°C, 237°C, 237°C, 210°C, 205°C and 224°C, respectively.

The following examples were prepared with compositions given in terms of phr in Table 1.

**Table 1**

| Sample | Control 1 | Control 2 | 3 | 4 | 5 | 6 | 7 |
|---|---|---|---|---|---|---|---|
| Natural rubber | 100 | 100 | 80.8 | 74.45 | 80.8 | 73.79 | 80.8 |
| Silica partitioning agent | 4 | 7 | 3.23 | 2.98 | 4.04 | 2.95 | 4.04 |
| Nylon 6² | 25 | 25 | 24.82 | 24.76 | 24.82 | 0 | 0 |
| Nylon 6 with 4 weight percent 2:1 layer silicate³ | 0 | 0 | 0 | 0 | 0 | 34.94 | 0 |
| Nylon 11⁴ | 0 | 0 | 0 | 0 | 0 | 0 | 24.82 |
| Maleated-EPDM⁵ | 0 | 0 | 19.2 | 25.55 | 26.21 | 0 | 0 |
| Ethylene-ethyl acrylate-maleic anhydride terpolymer⁶ | 0 | 0 | 0 | 0 | 19.2 | 0 | 19.2 |
| Stannous chloride | 0 | 0.05 | 0 | 0 | 0 | 0 | 0 |
| Phenolic resin | 0 | 0.5 | 0 | 0 | 0 | 0 | 0 |

| | | | | | | | |
|---|---|---|---|---|---|---|---|
| ¹Natural rubber grade technically specified rubber 20 MTSR 20 | | | | | | | |
| ²Sold by Honeywell under the designation Capron™ 8200NL | | | | | | | |
| ³Sold by Honeywell under the designation Capron™ XA2744 | | | | | | | |
| ⁴Sold by Atofina under the designation Rilsan Besno P20TL | | | | | | | |
| ⁵Sold by Uniroyal Chemical under the designation Royaltuf™ 490 having about 1 percent grafted maleic anhydride | | | | | | | |
| ⁷Sold by Atofina under the designation Lotader™ 4700 with about 1.5 percent copolymerized maleic anhydride | | | | | | | |

**Table 2 -**

| **Physical Properties and Characteristics** | | | | | | | |
|---|---|---|---|---|---|---|---|
| Sample | Control 1 | Control 2 | 3 | 4 | 5 | 6 | 7 |
| Mooney viscosity (ML 1+4 at 100°C) | 47 | 53 | 46 | 44 | 44 | 70 | 60 |
| Extrudate appearance¹ | R | R | S | S | S | S | S |
| Skin formation at die² | Y | Y | N | N | N | N | N |
| Location of high olefinic unsaturation rubber³ | C | C | C | C | C | C | C |
| Location of thermoplastic⁴ | D | D | D | D | D | D | D |
| Location of low olefinic or no olefinic rubber⁵ | NA | NA | PAT | PAT | PAT | PAT | PAT |
| Processible in rubber mixing and rubber article manufacturing processes⁶ | Y | Y | Y | Y | Y | Y | Y |
| Morphology of thermoplastic⁷ | CO | CO | F | F | F | F | F |

| | | | | | | | |
|---|---|---|---|---|---|---|---|
| ¹"R" indicates rough and "S" indicates smooth | | | | | | | |
| ²"Y" indicates yes and "N" indicates no | | | | | | | |
| ³"C" indicates continuous phase as viewed in Scanning Probe Microscopy or Transmission Electronic Microscopy | | | | | | | |
| ⁴"D" indicates dispersed phase | | | | | | | |
| ⁵"NA" indicates not applicable and "PAT" indicates primarily around thermoplastic | | | | | | | |
| ⁶"Y" indicates yes | | | | | | | |
| ⁷"CO" indicates coarse and "F" indicates finer than the Controls 1 and 2 | | | | | | | |

Compositions 3 through 7 resulted in smooth extrudates with no nylon die deposits enabling smooth production of the rubber composition and without macroscopic undispersed thermoplastic phase in the high olefinic unsaturation rubber.

### EXAMPLE II

### Preparation of Rubber Compound

Compositions Control 2, 3 and 4 from Table 1 of Example I were further mixed and compounded with a high olefinic unsaturation rubber, oil, silica, carbon black, silane coupling agent, sulfur and accelerators, vulcanized and tested for physical properties. The compounds were prepared in a Banbury® using a three step mixing procedure.

**Table 3 -**

| **Composition in Parts** | | | |
|---|---|---|---|
| Sample | Control 8 | 9 | 10 |
| First Non-productive Mix Stage | | | |
| Natural rubber | 50 | 49.64 | 49.51 |
| Blend of nylon 6 (from Sample 2)¹ | 66.25 | 0 | 0 |
| Alloy of nylon 6 (from Sample 3)² | 0 | 64.49 | 0 |
| Alloy of nylon 6 (from Sample 4)³ | 0 | 0 | 64.49 |
| Carbon black | 35 | 35 | 35 |
| Microcrystalline wax | 1 | 1 | 1 |
| Paraffin wax | 0.5 | 0.5 | 0.5 |
| Stearic acid | 3 | 3 | 3 |
| Zinc oxide | 3 | 3 | 3 |
| Antiozonant | 2 | 2 | 2 |
| Processing oil | 5 | 5 | 5 |

| Second Non-productive Mix Stage | | | |
|---|---|---|---|
| Silica | 36 | 36 | 36 |
| Si 69 (50 percent active on carbon black) | 6 | 6 | 6 |

| Productive Mix Stage | | | |
|---|---|---|---|
| Antioxidant | 1 | 1 | 1 |
| Primary Accelerator | 1.5 | 1.5 | 1.5 |
| Sulfur | 1.25 | 1.25 | 1.25 |
| Secondary Accelerator | 0.25 | 0.25 | 0.25 |

| | | | |
|---|---|---|---|
| ^{1, 2, 3}The amount of nylon 6 contained in the rubber composition added in the first non-productive mix stage was 12.5 parts by weight of nylon 6 per 100 parts by weight of rubber. | | | |

**Table 4 -**

| **Physical Properties of Vulcanized Rubber Compositions** | | | |
|---|---|---|---|
| Sample | Control 8 | 9 | 10 |
| 100% modulus (MPa) | 4.7 | 4.6 | 4.4 |
| 300% modulus (MPa) | 17.2 | 17.3 | 17.5 |
| Tensile strength (MPa) | 17.4 | 17.3 | 17.5 |
| Elongation at break (%) | 346 | 333 | 334 |
| Monsanto fatigue to failure (hundreds of cycles) | 150 | 294 | 442 |

Vulcanized articles of Examples 9 and 10 that were made from compositions with finer morphology and where the interface between the dispersed thermoplastic phase and the continuous high olefinic unsaturation rubber consists primarily of a rubber with substantial side chains grafted with nylon, the articles possess increased fatigue life. Increased fatigue life is desired under flexural fatigue conditions for vulcanized articles.

### EXAMPLE III

### Preparation of Rubber Composition for Use in Ring Insert

A rubber composition was prepared by similar procedure and conditions as explained in Example I, with the following ingredients
(A) 71 parts by weight of synthetic cis-1,4 polyisoprene made by The Goodyear Tire & Rubber Company and sold under the designation Natsyn® 2200;
(B) 5.42 parts by weight of silica partitioning agent;
(C) 32.7 parts by weight of nylon 6, sold by Honeywell under the designation Capron™ 8200NL; and
(D) 29 parts by weight of maleated-EPDM sold by Uniroyal Chemical under the designation Royaltuf™ 498 having about 1 percent grafted maleic anhydride.

This nylon-6 alloy was then mixed in a rubber composition for use as a tread support ring using a Haake mixer and a conventional two stage mix procedure.

**Table 5 -**

| **Composition of Tread Support Ring in Parts** | | | | | |
|---|---|---|---|---|---|
| Sample | Control 11 | Control 12 | 13 | 14 | 15 |
| First Non-productive Mix Staqe | | | | | |
| Natural rubber (TSR-20)¹ | 100 | 100 | 0 | 0 | 0 |
| Cis-1,4 polyisoprene² | 0 | 0 | 49.32 | 49.32 | 5.4 |
| Alloy of nylon-6 | 0 | 0 | 70 | 70 | 110 |
| Silica | 56 | 70 | 30 | 30 | 37 |
| Antiozonant | 3 | 3 | 3 | 3 | 3 |
| Antioxidant | 1 | 1 | 1 | 1 | 1 |
| Zinc oxide | 4 | 4 | 5 | 5 | 5 |
| Stearic acid | 1 | 1 | 1 | 1 | 1 |
| Coupling agent | 9.3 | 11 | 4.8 | 4.8 | 6.5 |

| Productive Mix Stage | | | | | |
|---|---|---|---|---|---|
| Primary accelerator | 3 | 3 | 0.7 | 1.1 | 1.81 |
| Secondary accelerator | 0 | 0 | 0.3 | 0.1 | 0.2 |
| Morpholine disulfide | 0 | 0 | 2.7 | 2.7 | 2.7 |
| Sulfur | 6.8 | 5.63 | 7 | 5 | 5.85 |

| | | | | | |
|---|---|---|---|---|---|
| ¹Natural rubber grade technically specified rubber 20 MTSR 20 | | | | | |
| ²The Goodyear Tire & Rubber Company and sold under the designation Natsyn® 2200 | | | | | |

**Table 6 -**

| **Physical Properties of Tread Support Ring Compositions** | | | | | |
|---|---|---|---|---|---|
| Sample | Control 11 | Control 12 | 13 | 14 | 15 |
| RPA G' 1 % strain | 6492 | 7609 | 2969 | 3076 | 4627 |
| RPA tan delta 1% strain | 0.13 | 0.162 | 0.091 | 0.076 | 0.082 |
| RPA G' 10% strain | 2739 | 3331 | 2052 | 2020 | 2448 |
| RPA tan delta 10% strain | 0.206 | 0.2 | 0.119 | 0.103 | 0.104 |
| RPA G' 14% strain | 2282 | N/A | 1748 | 1866 | 2221 |
| RPA tan delta 14% strain | 0.215 | N/A | 0.12 | 0.105 | 0.107 |
| Elongation at break (%) | 343 | 274 | 411 | 303 | 230 |
| Tensile strength (MPa) | 19 | 18 | 15 | 16 | 15 |
| Specific gravity | 1.189 | 1.216 | 1.08 | 1.07 | 1.11 |

The present invention results in compositions with significantly lower specific gravity and significantly lower tan delta values at equal or even high filler levels. Tan delta is the ratio of the loss modulus G" to the storage modulus G' and is proportional to the heat generation of a rubber composition undergoing dynamic tension or compression. Low specific gravity and low heat build-up are desired properties of the tread support ring.

## Claims

1. A tread supporting ring (3) for use with a rim for a tire having two beads comprising a sulfur cured rubber composition composed of:
(A) 65 to 95 parts by weight per 100 parts by weight of rubber (phr) of a first rubber containing olefinic unsaturation;
(B) 5 to 35 phr of a rubber having nylon side chains grafted thereto, and
(C) 1 to 40 phr of at least one nylon.

2. The tread supporting ring of claim 1 wherein the amount of first rubber ranges from 75 to 86 phr.

3. The tread supporting ring of claim 1 wherein the amount of rubber having nylon side chains grafted thereto ranges from 14 to 25 phr.

4. The tread supporting ring of claim 1 wherein said nylon in the rubber composition ranges from 8 to 25 phr.

5. The tread supporting ring of claim 1 wherein said nylon is selected from the group consisting of nylon-6,6, nylon-6, nylon-7, nylon-8, nylon-9, nylon-10, nylon-11, nylon-12 and nylon-6,12.

6. The tread supporting ring of claim 1 wherein said nylon has a melting point ranging from 150°C to 255°C.

7. The tread supporting ring of claim 1 wherein said first rubber is selected from the group consisting of polybutadiene, styrene-butadiene rubber, synthetic polyisoprene, natural rubber, isoprene-butadiene rubber, isoprene-butadiene-styrene rubber, nitrile rubber, carboxylated nitrile rubber, EPDM and mixtures thereof.

8. The tread supporting ring of claim 1 wherein said rubber having nylon side chains is derived from the group consisting of polybutadiene, styrene-butadiene rubber, synthetic polyisoprene, natural rubber, isoprene-butadiene rubber, isoprene-butadiene-styrene rubber, nitrile rubber, carboxylated nitrile rubber, EPDM, ethylene-acrylate rubber and mixtures thereof.

9. The tread supporting ring of claim 1 wherein said first rubber is different from the rubber having nylon side chains grafted thereto.

10. The tread supporting ring of claim 1 wherein said first rubber is the same as the rubber having nylon side chains grafted thereto.
